# EUROPEAN PATENT SPECIFICATION

(11) **EP 0 551 997 B1**
(45) Date of publication and mention of the grant of the patent: **20.09.1995**
(21) Application number: 93300111.7
(22) Date of filing: 08.01.1993
(51) Int. Cl.: B60C 13/02, B60C 13/00

(54) **Pneumatic tyre**
Luftreifen
Bandage pneumatique

(30) Priority: 10.01.1992 JP 22147/92
(43) Date of publication of application: 21.07.1993
(73) Proprietor: SUMITOMO RUBBER INDUSTRIES, CO. LTD, Chuo-ku Kobe-shi Hyogo-ken 651 (JP)
(72) Inventor: Nakada, Yoko, Kawabe-gun, Hyogo-ken (JP)
(74) Representative: Stewart, Charles Geoffrey

(56) References cited:
- EP-A- 0 117 904
- PATENT ABSTRACTS OF JAPAN vol. 005, no. 025 (M-055)14 February 1981 & JP-A-55 152 605 (BRIDGESTONE CORP.) 28 November 1980
- PATENT ABSTRACTS OF JAPAN vol. 014, no. 228 (M-0973)15 May 1990 & JP-A-20 57 410 (OKAMOTO IND. INC.) 27 February 1990

## Description

The present invention relates to a pneumatic tyre of the type described in JP-A-2,057410 and corresponding to the preamble of claim 1, which has sidewalls improved in cut resistance.

When, for example, a vehicle, especially a passenger car, mounts the sidewalk, the tyre sidewall bumps against the edge stone. As a result, the sidewall is often broken to cause puncture, or damage which shortens the tyre life.

If, in order to provide cut resistance for the sidewalls, the thickness of sidewall rubber is increased, then ride comfort is deteriorated, tyre weight is increased and steering performance is lowered. Further, if the hardness of the sidewall rubber is increased, ride comfort is deteriorated, and the sidewall is liable to cracking.

It is therefore, an object of the present invention to provide a pneumatic tyre, in which the sidewalls are improved in cut resistance without sacrificing ride comfort and also without increasing the tyre weight.

According to one aspect of the present invention, a pneumatic tyre comprises a tread portion with a pair of edges, a pair of axially spaced bead portions each with a bead core, a pair of sidewalls extending one from each edge of the tread portion to a bead portion, a carcass extending between the bead portions, a tread rubber layer disposed radially outside the carcass to define the tread portion, a sidewall rubber layer disposed axially outside the carcass in each sidewall, characterised by the sidewall rubber layer being softer than the tread rubber layer, and a protective rubber layer disposed on the outer surface of the sidewall rubber layer to define part of the outer surface of each sidewall, wherein the protective rubber layer is made of a fibre-reinforced rubber composition containing 10 to 50 parts by weight of short fibrous reinforcements, 20 to 70 parts by weight of carbon black, and 100 parts by weight of rubber base consisting of 20 to 100 parts by weight of natural rubber (NR) or isoprene rubber (IR) and 80 to 0 parts by weight of butadiene rubber (BR), the short fibrous reinforcements being oriented in the tyre circumferential direction.

As a result the rubber layer has a superior cut resistance due to the short fibrous reinforcements. However, as the short fibrous reinforcements are oriented in the tyre circumferential direction, the increase in bending rigidity in the radial direction is not so large. Therefore, deterioration in ride comfort and increase in tyre weight are avoided.

Further, by using such a fibre-reinforced rubber composition, the total thickness of the sidewall portion in fact can be decreased without deteriorating other tyre performances and thus the tyre weight can be reduced.

An embodiment of the present invention will now be described in detail in conjunction with the accompanying drawings, in which:
Fig.1 is a cross sectional view of a tyre of the present invention;
Fig.2 is an enlarged cross sectional view of one of the sidewalls thereof;
Fig.3 is a cross sectional view of another example of the sidewall portion; and
Fig.4 is a schematic perspective view explaining a method of making a strip of the fibre-reinforced rubber for the protective rubber layer.

In the Figures, a pneumatic tyre 1 has a tread portion 2, a pair of axially spaced bead portions 4, and a pair of sidewalls 3 extending between the tread edges and the bead portions 4. A pair of bead cores 5 is provided one in each of the bead portions 4, a carcass 6 extends between the bead portions 4, and a belt 7 is disposed radially outside the carcass 6 under the tread portion.

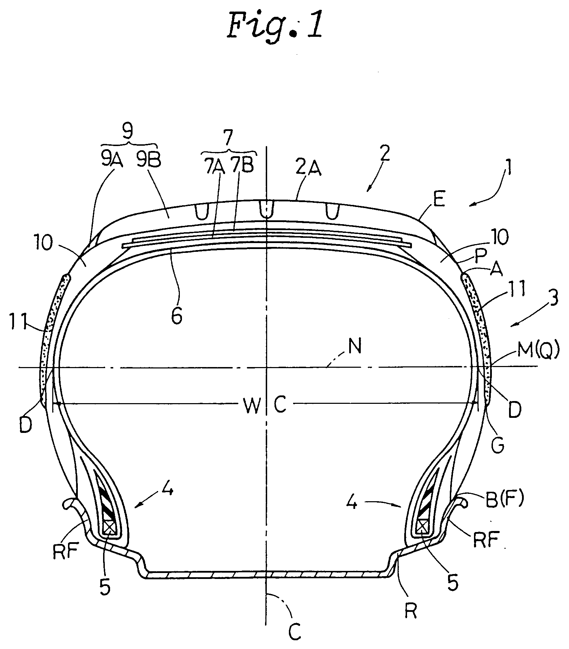

Fig.1 shows the unloaded state with the tyre 1 mounted on its regular rim (R) and inflated to its regular pressure, but with no applied vehicle or tyre load.

The carcass 6 comprises at least one ply, in this embodiment two plies, of cords arranged radially at an angle of 70 to 90 degrees with respect to the tyre equator C and extending between the bead portions 4 and turned up around each bead core from the axially inside to the outside thereof to form two turned up portions and one main carcass portion.

For the carcass cords, organic fibre cords, e.g. nylon, polyester, aromatic polyamide and the like are used.

Each bead portion 4 is provided between the carcass main portion and the turned up portion with a rubber bead apex 8 extending taperingly radially outwardly from its bead core 5.

The belt 7 comprises two plies 7A and 7B of parallel cords laid at an angle of 12 to 30 degrees with respect to the tyre equator C so that the cords in the radially inner ply 7A cross the cords in the radially outer ply 7B.

For the belt cords, organic fibre cords, e.g. nylon, polyester, aromatic polyamide and the like and steel cords can be used.

The tread 2 is provided radially outside the belt 7 with a tread rubber layer 9.

The tread rubber layer 9 in this example consists of a main part 9B extending from one tread edge to the other edge defining a tread surface 2A and a pair of buttress parts 9A each located at each edge of the main part 9B.

The JIS A hardness of the tread rubber main part 9B is in the range of 55 to 72, and is larger than that of the tread rubber buttress parts 9A.

A sidewall rubber layer 10 is disposed axially outside the carcass 6 in each of the sidewalls 3. A main sidewall rubber layer 10 extends from the tread edge to the bead portion 4 along each outer surface of the carcass 6.

The radially outer edge of the sidewall rubber layer 10 is located under the edge of the tread rubber layer 9 and extends to the belt edge.

The radially inner edge of the sidewall rubber layer 10 is terminated at a position substantially corresponding to the radially outer edge (F) of the flange (RF) of the regular rim (R).

The JIS A hardness of the sidewall rubber layer 10 is in the range of 50 to 65, and is smaller than those of the tread rubber main part 9B and the tread rubber buttress parts 9A.

In each sidewall portion 3, a protective rubber layer 11 is disposed on the axially outside of the sidewall rubber layer 10.

The protective rubber layer 11 is positioned between two points (P and B), that is, the radially outer edge (A) and the radially inner edge (G) thereof are positioned within the range between the two points (P and B).

The point (P) corresponds to the edge of the tread rubber layer 9, and it is the boundary, on the outer surface of the tyre, between the outer surface of the tread rubber layer 9 and the outer surface of the sidewall rubber layer 10.

The point (B) corresponds to the point at which the outer surface of the tyre starts to contact the axially inner surface of a flange (RF) of its regular wheel rim (R) when the tyre 1 is mounted on its regular wheel rim (R) and inflated to its regular inner pressure but loaded with no tyre load.

Preferably, the length of the protective rubber layer 11 measured from the radially outer edge (A) to the radially inner edge (G) therealong is set to be 15 to 70 % of the length measured from the point (P) to the point (B) along the outer surface of the sidewall rubber layer 10.

The thickness of the protective rubber layer 11 is in the range of 2 mm to 20 mm.

Here, in each sidewall 3, a maximum carcass width point (D) is defined as a point on the outer surface of the carcass 6 at which the maximum cross sectional width WC of the carcass 6 lies, and a maximum width point (M) is defined as a point on the outer surface of the tyre at the same radial height as the maximum carcass width point (D), and further a maximum tyre width point (Q) is defined as a point on the outer surface of the tyre at which the maximum cross sectional width of the tyre lies.

Preferably, the radially outer edge (A) of the protective rubber layer 11 is positioned radially inwards of the point (P) by a distance of about 5 to 15 mm along the surface, so that the protective rubber layer 11 and the tread rubber layer 9 are not overlapped, and between the adjacent edges thereof, the sidewall rubber layer 10 is exposed.

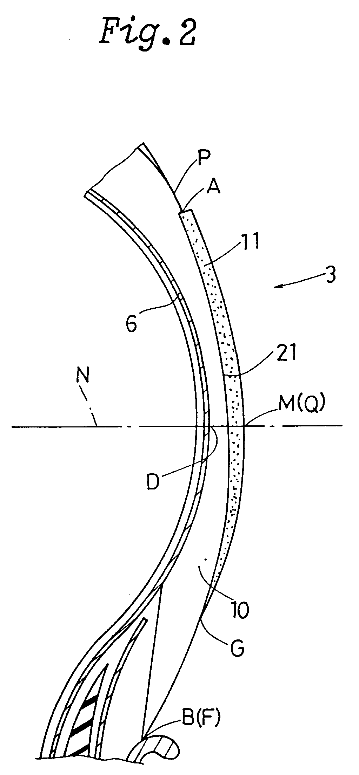

In Figs.1 and 2, the radially inner edge (G) of the protective rubber layer 11 is positioned radially inwards of the maximum width point (M), and the three points (D, M and Q) are on a line (N) parallel with the tyre axial direction.

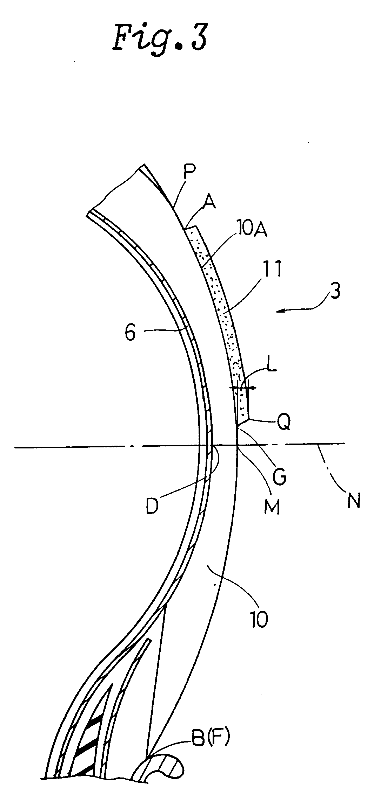

In Fig.3, the radially inner edge (G) of the protective rubber layer 11 is terminated radially outward of the maximum width point (M). The maximum tyre width point (Q) is positioned at the radially inner edge (G) of the protective rubber layer 11.

The amount of the axial protrusion (L) of the point (Q) from the point (M) is set in the range of 2 mm to 10 mm.

If (L) is less than 2 mm, the sidewall rubber layer 10 is in danger of being cut when bumped against a kerb edge stone or the like. If (L) exceeds 10 mm, the tyre weight increases too much and the sidewall rigidity balance is greatly disturbed to deteriorate steering stability and ride comfort.

As shown, the maximum tyre width point (Q) is provided by the protective rubber layer.

Also, the protective rubber layer 11 may be placed in a recession 21 formed on the outer surface of the sidewall rubber layer 10 as shown Fig.2. It is also possible to dispose the protective rubber layer 10 on the outer surface 10A of the sidewall rubber layer 10 without the recession as shown in Fig.3.

Incidentally, the protective rubber layer 11 and the sidewall rubber layer 10 are adhered each other by means of vulcanisation.

The protective rubber layer 11 is made of a fibre-reinforced rubber composition containing 10 to 50 parts by weight of short fibrous reinforcements, 20 to 70 parts by weight of carbon black, and 100 parts by weight of rubber base consisting of 20 to 100 parts by weight of natural rubber (NR) or isoprene rubber (IR) and 80 to 0 parts by weight of butadiene rubber (BR).

For the short fibrous reinforcements, organic fibres, e.g. nylon fibres, rayon fibres, polyester fibres, aromatic polyamide fibres, glucose fibres, crystalline polybutadiene fibres, cotton fibres, carbon fibres and the like, and inorganic fibres, e.g. metallic fibres or whiskers, glass fibres and the like, can be used.

Preferably, the diameter of the short fibres is 1 micron to 0.1 mm and the length thereof is 20 micron to 2 mm. The aspect ratio is more than 10. If the diameter and length are lower than the respective ranges, sufficient cut resistance is not provided by the protective rubber layer 11. If they are higher, the fatigue resistance of the protective rubber layer is too poor.

The short fibres are circumferentially oriented at 0 to 20 degrees with respect to the circumferential direction.

The protective rubber layer 11 has a complex elastic modulus E* in the range of 50 to 450 kgf/cm², preferably 80 to 400 kgf/cm².

If the complex elastic modulus is out of this range, adequate cut resistance and fatigue resistance are not obtained.

The complex elastic modulus was measured by a viscoelastic spectrometer of Iwamoto Seisakusyo under a strain amplitude of 2 %, a frequency of 10Hz, and a temperature of 70 degrees C, using a 4 mm width 30 mm length and 2 mm thickness specimen of which the longitudinal direction coincides with the circumferential direction. Therefore, the above-mentioned value of the complex elastic modulus is in the circumferential direction.

If the content of the reinforcement is less than 10 parts by weight, an effective cut resistance cannot be obtained. If the content is more than 50 parts by weight, the rigidity in the radial direction increases which deteriorates ride comfort and durability, and also workability of the material is greatly lowered.

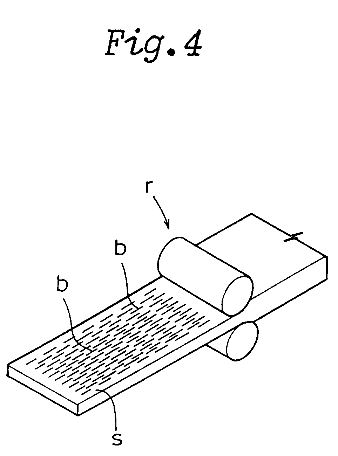

To manufacture the tyre a strip (s) of the fibre-reinforced rubber composition, which as shown in Fig.4 has the short fibres (b) oriented in the longitudinal direction thereof is mixed using a Banbury mixer, extruder, calender roller or the like. Then, the strip (s) is applied on the outer surface of the sidewall rubber layer 10, and they are united during tyre vulcanisation in a tyre mould.

As examples, steel radial carcass ply tyres were prepared and tested. The tyre structures were the same as Fig.1 with the exception of the protective rubber layer. The tyre size was 155SR15.

In Table 1, the recipes for fibre-reinforced rubber compositions (A, B, C) and non-reinforced rubber composition (D) which are used in the test tyres, are shown.

In Table 2, the results of the following edge stone test and tyre specifications are shown.

### A) Edge stone test

The tyre was fitted to the front wheel of a 1500 cc passenger car, and using a 110 mm height concrete edge stone, the tyre was bumped against the edge stone at a speed of 20 km/hr at an approach angle of 25 degrees. The test was repeated ten times, and the number of occurrences of puncture per ten times was obtained.

As is apparent from the test results, it was confirmed that the cut resistance of the inventive tyres was superior to the reference tyres.

As described above, in the pneumatic tyre according to the present invention, not only an increase in the cut resistance of the sidewall portion but also a decrease in the total thickness of the sidewall portion can be achieved. Therefore, a tyre weight reduction to improve running performance and a puncture resistance to provide running safety are achieved. The present invention is suitable for application to passenger car tyres.

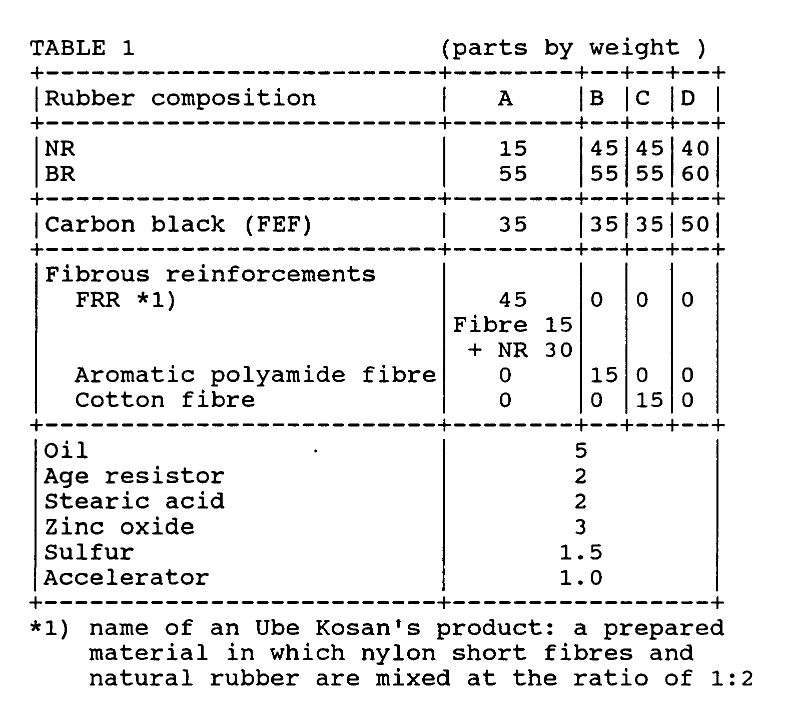

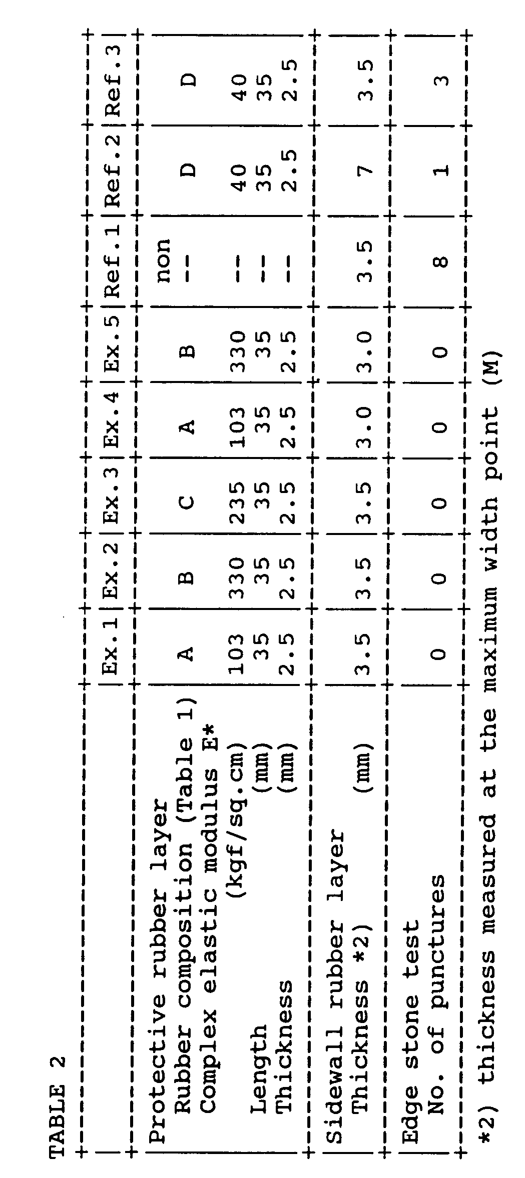

## Claims

1. A pneumatic tyre comprising a tread portion (2) with a pair of edges, a pair of axially spaced bead portions (4) each with a bead core (5), a pair of sidewalls (3) extending one from each edge of the tread portion (2) to the bead portion (4), a carcass (6) extending between the bead portions (4), a tread rubber layer (9) disposed radially outside the carcass (6) to define the tread portion (2), a sidewall rubber layer (10) disposed axially outside the carcass (6) in each sidewall (3), characterised by the sidewall rubber layer being softer than the tread rubber layer, and a protective rubber layer (11) disposed on the outer surface of the sidewall rubber layer (10) to define part of the outer surface of each sidewall (3), wherein the protective rubber layer is made of a fibre-reinforced rubber composition containing 10 to 50 parts by weight of short fibrous reinforcements, 20 to 70 parts by weight of carbon black, and 100 parts by weight of rubber base consisting of 20 to 100 parts by weight of natural rubber (NR) or isoprene rubber (IR) and 80 to 0 parts by weight of butadiene rubber (BR), the short fibrous reinforcements being oriented in the tyre circumferential direction.

2. A pneumatic tyre according to claim 1, characterised in that the mean length of the short fibrous reinforcements is in the range of 20 microns to 2.0 mm, and the mean diameter of the short fibrous reinforcements is 1 micron to 0.1 mm.

3. A pneumatic tyre according to claim 1 or 2, characterised in that the protective rubber layer has a complex elastic modulus of 50 to 450 kgf/cm² in the tyre circumferential direction under a strain amplitude of 2 %, a frequency of 10 Hz, and a temperature of 70 degrees C.

4. A pneumatic tyre according to claim 1, 2 or 3, characterised in that the protective rubber layer (11) has a radially outer edge (A) terminated near the edge (P) of the tread rubber layer.

5. A pneumatic tyre according to claim 4, characterised in that the protective rubber layer (11) has a radially inner edge (G) terminated radially inward of the maximum carcass width point (D) and within the sidewall (3).

6. A pneumatic tyre according to claim 4 or 5, characterised in that the protective rubber layer (11) has a radially inner edge (G) terminated radially outwards of the maximum carcass width point (D).

7. A pneumatic tyre according to claim 6, characterised in that the maximum tyre cross sectional width point (Q) lies on the protective rubber layer (11), and the axial distance (L) measured from the maximum tyre cross sectional width point (Q) to a maximum width point (M) is in the range of 2 mm to 10mm, where the maximum width point (M) is defined as a point on the outer surface of the sidewall rubber layer located at the same radial height as the maximum carcass width point (D).

## Patentansprüche

1. Ein Luftreifen mit einem Laufflächenteil (2) mit einem Ränderpaar, einem Paar axial beabstandeter Wulstteile (4), jeweils mit einem Wulstkern (5), einem Paar Seitenwände (3), die sich von jedem Rand des Laufflächenteils (2) zum Wulstteil (4) erstrecken, einer Karkasse (6), die sich zwischen den Wulstteilen (4) erstreckt, einer Laufflächengummischicht (9), die radial außerhalb der Karkasse (6) angeordnet ist, um den Laufflächenteil (2) festzulegen, einer Seitenwandgummischicht (10), die axial außerhalb der Karkasse (6) in jeder Seitenwand (3) angeordnet ist,
dadurch gekennzeichnet,
daß die Seitenwandgummischicht weicher als die Laufflächengummischicht ist und eine Schutzgummischicht (11) auf der äußeren Oberfläche der Seitenwandgummischicht (10) angeordnet ist, um einen Teil der äußeren Oberfläche jeder Seitenwand (3) festzulegen, worin die Schutzgummischicht aus einer faserverstärkten Gummizusammensetzung hergestellt ist, die 10 bis 50 Gewichtsteile kurze faserartige Verstärkungen, 20 bis 70 Gewichtsteile Ruß und 100 Gewichtsteile einer Gummibasis beinhaltet, die aus 20 bis 100 Gewichtsteilen Naturkautschuk (NR) oder Isoprengummi (IR) und 80 bis 0 Gewichtsteilen Butadiengummi (BR) besteht, wobei die kurzen faserartigen Verstärkungen in der Reifenumfangsrichtung orientiert sind.

2. Ein Luftreifen nach Anspruch 1,
dadurch gekennzeichnet,
daß die mittlere Länge der kurzen faserartigen Verstärkungen im Bereich von 20 Mikrometer bis 2,0 mm liegt, und der mittlere Durchmesser der kurzen faserartigen Verstärkungen 1 Mikrometer bis 0,1 mm beträgt.

3. Ein Luftreifen nach Anspruch 1 oder 2,
dadurch gekennzeichnet,
daß die Schutzgummischicht einen komplexen Elastizitätsmodul von 50 bis 450 kp/cm² in der Reifenumfangsrichtung unter einer Dehnungsamplitude von 2 %, einer Frequenz von 10 Hz und einer Temperatur von 70 Grad C aufweist.

4. Ein Luftreifen nach Anspruch 1, 2 oder 3,
dadurch gekennzeichnet,
daß die Schutzgummischicht (11) einen radial äußeren Rand (A) aufweist, der nahe dem Rand (P) der Laufflächengummischicht abgeschlossen ist.

5. Ein Luftreifen nach Anspruch 4,
dadurch gekennzeichnet,
daß die Schutzgummischicht (11) einen radial inneren Rand (G) aufweist, der radial einwärts vom Punkt maximaler Karkassenbreite (D) und innerhalb der Seitenwand (3) abgeschlossen ist.

6. Ein Luftreifen nach Anspruch 4 oder 5,
dadurch gekennzeichnet,
daß die Schutzgummischicht (11) einen radial inneren Rand (G) aufweist, der radial auswärts vom Punkt maximaler Karkassenbreite (D) abgeschlossen ist.

7. Ein Luftreifen nach Anspruch 6,
dadurch gekennzeichnet,
daß der Punkt maximaler Reifenquerschnittsbreite (Q) auf der Schutzgummischicht (11) liegt, und der axiale Abstand (L), gemessen vom Punkt maximaler Reifenquerschnittsbreite (Q) zu einem Punkt maximaler Breite (M) im Bereich von 2 mm bis 10 mm liegt, wobei der Punkt maximaler Breite (M) festgelegt ist als ein Punkt auf der äußere Oberfläche der Seitenwandgummischicht, der in der gleichen radialen Höhe wie der Punkt maximaler Karkassenbreite (D) angeordnet ist.

## Revendications

1. Pneumatique comprenant une partie (2) de bande de roulement ayant une paire de bords, une paire de parties (4) de talon qui sont axialement espacées et ayant chacune une tringle (5), une paire de flancs (3) allant d'un bord de la partie de bande de roulement (2) à la partie de talon (4), une carcasse (6) disposée entre les parties de talon (4), une couche (9) de caoutchouc de bande de roulement disposée radialement à l'extérieur de la carcasse (6) pour la délimitation de la partie de bande de roulement (2), et une couche (10) de caoutchouc de flanc disposée axialement à l'extérieur de la carcasse (6) dans chaque flanc (3), caractérisé en ce que la couche de caoutchouc de flanc est plus tendre que la couche de caoutchouc de bande de roulement, et une couche protectrice (11) de caoutchouc est disposée à la surface externe de la couche (10) de caoutchouc de flanc pour la délimitation d'une partie de la surface externe de chaque flanc (3), la couche protectrice de caoutchouc étant formée d'une composition de caoutchouc armé de fibres contenant 10 à 50 parties en poids de courtes fibres d'armature, 20 à 70 parties en poids de noir de carbone et 100 parties en poids d'une base de caoutchouc constituée de 20 à 100 parties en poids de caoutchouc naturel (NR) ou de caoutchouc d'isoprène (IR) et de 80 à 0 parties en poids de caoutchouc de butadiène (BR), les courtes fibres d'armature étant orientées dans la direction circonférentielle du pneumatique.

2. Pneumatique selon la revendication 1, caractérisé en ce que la longueur moyenne des courtes fibres d'armature est comprise entre 20 µm et 2,0 mm, et le diamètre moyen des courtes fibres d'armature est compris entre 1 µm et 0,1 mm.

3. Pneumatique selon la revendication 1 ou 2, caractérisé en ce que la couche protectrice de caoutchouc a un module complexe d'élasticité compris entre 5.10⁶ et 45.10⁶ Pa (50 à 450 kgf/cm²) dans la direction circonférentielle du pneumatique pour une amplitude de déformation de 2 %, une fréquence de 10 Hz et une température de 70 °C.

4. Pneumatique selon la revendication 1, 2 ou 3, caractérisé en ce que la couche protectrice (11) de caoutchouc a un bord radialement externe (A) qui se termine près du bord (P) de la couche de caoutchouc de bande de roulement.

5. Pneumatique selon la revendication 4, caractérisé en ce que la couche protectrice (11) de caoutchouc a un bord radialement interne (G) qui se termine radialement vers l'intérieur du point de largeur maximale (D) de la carcasse et dans le flanc (3).

6. Pneumatique selon la revendication 4 ou 5, caractérisé en ce que la couche protectrice (11) de caoutchouc a un bord radialement interne (G) qui se termine radialement à l'extérieur du point de largeur maximale (D) de la carcasse.

7. Pneumatique selon la revendication 6, caractérisé en ce que le point de largeur maximale en coupe (Q) du pneumatique se trouve sur la couche protectrice (11) de caoutchouc, et la distance axiale (L) mesurée du point (Q) de largeur maximale en coupe du pneumatique au point (M) de largeur maximale est comprise entre 2 et 10 mm, le point (M) de largeur maximale étant défini comme le point de la surface externe de la couche de caoutchouc de flanc qui se trouve à la même hauteur radiale que le point (D) de largeur maximale de la carcasse.
